Europäisches Patentamt

European Patent Office

Office européen des brevets

(11) Publication number: **0 042 236**
A1

## EUROPEAN PATENT APPLICATION

(21) Application number: 81302465.0

(22) Date of filing: 03.06.81

(51) Int. Cl.³: **B 65 G 57/30**, B 22 D 5/00

(30) Priority: 13.06.80 GB 8019358

(43) Date of publication of application: 23.12.81
Bulletin 81/51

(84) Designated Contracting States: CH DE FR GB IT LI

(71) Applicant: Worswick, Alan, Philips Road, Blackburn BB1 5SG (GB)

(72) Inventor: Worswick, Alan, Philips Road, Blackburn BB1 5SG (GB)

(74) Representative: Lawson David Glynne et al, MARKS & CLERK 57-60 Lincoln's Inn Fields, London WC2A 3LS (GB)

(54) **Stacking device and method.**

(57) A stack of ingots is built up by assembling the ingots (2) into layers (12) and then lifting each successive layer into engagement with the bottom of a stack (13) formed by previously lifted layers. The stack rests on a support (5) and is rotated between successive layers so that the ingots in a layer are at right angles to those in odjoining layers. This provides an increased rate of stacking compared with conventional ingot stackers.

0042236

230P39897X

## STACKING DEVICE AND METHOD

This invention relates to making stacks comprising successive layers each containing one or more articles. The invention has particular but not exclusive reference to the stacking of metal ingots and similar elongate articles.

In general, a stack is formed by adding layers one on top of another.   This can involve a considerable amount of handling, particularly if the successive articles or layers have to be lifted to the top of the stack.

It is normal practice in stacking ingots, to accumulate a layer of ingots, pick them up with a grab, raise them to a height greater than that of the finished stack, transfer them to the position at which the finished stack is to be formed, lower the layer until it contacts either the stillage on the storage conveyor, or the previous layer of ingots, release the layer, lift the grab, return it to a position above the layers being formed, lower it, and pick up the next layer of ingots, repeating the process until the stack is completed.

Each of these movements normally involves a travel of between 30 and 50 inches, resulting in a minimum time cycle to transfer a layer of about 15 seconds.

According to the present invention, a stack is formed by inserting successive layers at the bottom of the stack, i.e. below the previous layer of the stack.

More specifically, the stacking device comprises means for supporting a stack with a space below it to receive the next layer, and means for lifting this next layer to form the bottom of the stack.

The stack may for example be supported by pawls which support the stack but allow passage of the next succeeding layer lifted from below.

The stack may be raised by the next succeeding layer as the latter is lifted into contact with the stack, or the stack may be lifted by a separate lifting means in order to make room for the next layer at the bottom of the stack.

Each layer may consist of a single article for example a sheet, an assembly of articles for example on a pallet, or a group of articles for example ingots laid side by side. In the case of elongate articles such as ingots, the articles in one layer may be oriented at $90°$ to those in the next layer, for stability.

An ingot stacker embodying the invention is shown by way of example in the accompanying drawings, in which:
Figure 1 is a side elevation,

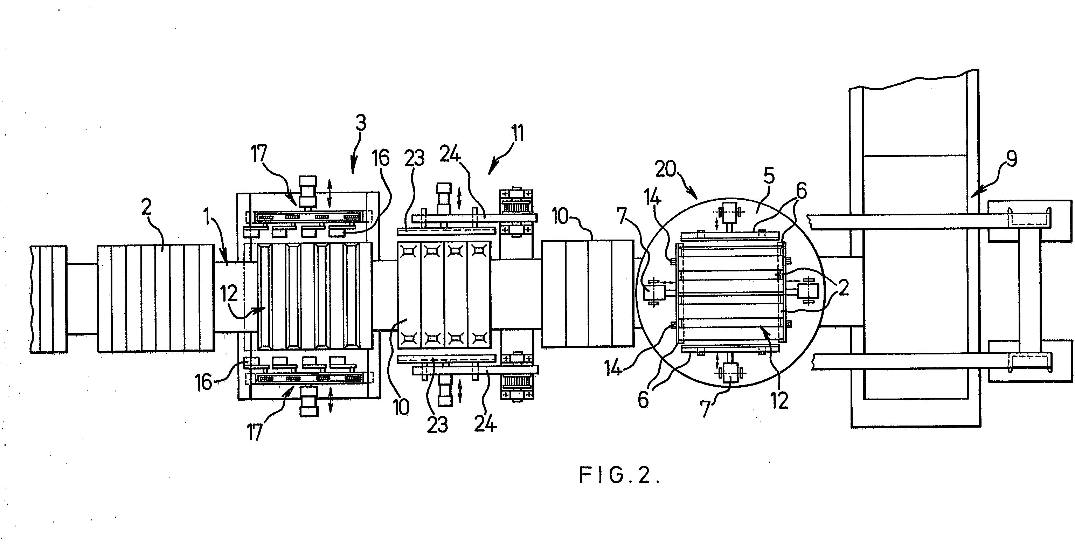

Figure 2 is a plan, and
Figure 3 shows a modified stacker.
An endless conveyor 1 carries bar ingots 2 in batches of eight, each ingot being oriented with its longitudinal direction at right angles to the longitudinal direction and direction of movement of the conveyor 1. Each ingot is of trapezium cross section. To provide a more compact arrangement of the ingots, a turn-over station 3 is provided. This comprises four pairs of ingot grippers 16 and driving means 17 for pivoting these about vertical axis. By means of the grippers 16 alternate ingots in each group of eight are gripped at opposite ends and turned through 180°, to form a layer 12 of eight nested ingots. Successive layers 12 of ingots formed in this way are conveyed by the conveyor 1 to a stacking location at which there is a lifting table 4 mounted on a vertical pneumatic or hydraulic cylinder 19 for raising and lowering the table. At the down-stream side of the lifting table is a stop 18 which prevents further movement of the ingots so that these are pushed by the conveyor into a tightly packed layer over the lifting table.

Directly above the lifting table is a stack support 20 comprising a circular plate 5 mounted on a suitable supporting structure so that it can rotate about its centre, about a vertical axis 21 coaxial with the lifting table. The plate 5 is provided with suitable driving means (not shown) for effecting such rotation. The plate 5 has a central square aperture 22 the sides of which are slightly longer than the ingots 2.

Along each side of the aperture 22 extends an elongate pawl 6. Each pawl 6 extends inwardly and upwardly from pivots 14 on the plate 5, and can be retracted or advanced by pivoting about these pivots, by means of hydraulic or pneumatic cylinders 7 mounted on the plate 5. The pair of pawls mounted at one pair of opposite sides of the aperture 22 can be operated independently of the other pair of pawls, mounted at the other pair of opposite sides of the aperture.

When a layer 12 of ingots has been formed over the lifting table 4, the latter is raised so as to lift the layer of ingots through the aperture 22. The pair of pawls 6 parallel to the conveyor 1 are retracted to allow the ingots to pass between them. It is not necessary to retract the other pair of pawls, perpendicular to the conveyor, because the width of the ingot layer

0042236

- 4 -

perpendicular to the ingot length is slightly less than the ingot length and the layer can therefore pass between the pawls perpendicular to the conveyor when the latter are in their advanced positions.

When the layer of ingots has been lifted high enough, the previously retracted pawls 6 are pivoted forwards so as to engage below the ends of the ingots of the lifted layer. The lifting table is then lowered and the ingots are left resting with their ends on the pawls.

A further layer of ingots is formed on the lowered table 4. Before this next layer is lifted, the plate 5 is rotated through 90° about the vertical axis 21, so that the ingots of the previously lifted layer are now parallel to the conveyor. When the next layer on the lifting table is lifted, the pawls which have now been moved by the rotation of the table 5 into positions parallel to the conveyor (that is, the pawls parallel to the ingots of the previously lifted layer) are retracted, allowing the new layer of ingots to be lifted between them, while the previously lifted layer (or layers) are supported by the other pair of pawls, which are now perpendicular to the conveyor 1. The new layer of ingots on the lifting table is lifted into contact with the bottom of the previously lifted ingots now held in their elevated positions, and the new layer lifts the previous layer or layers. When the new bottom layer has been lifted clear of the retracted pawls, the latter are pivoted forwards and the lifting table is lowered, leaving the new bottom layer of ingots resting on these pawls, and the previously lifted layer (or layers) of ingots resting on the bottom layer which has just been lifted. By repeating the operations just described, a stack 13 of layers 12 composed of ingots 2 is formed, and in each layer the ingots are oriented at right angles to the ingots in the adjoining layer or layers, to enhance the stability of the stack.

Between successive lifting operations, the plate 5 is turned through a right angle, either in the same direction each time, or in reciprocating manner.

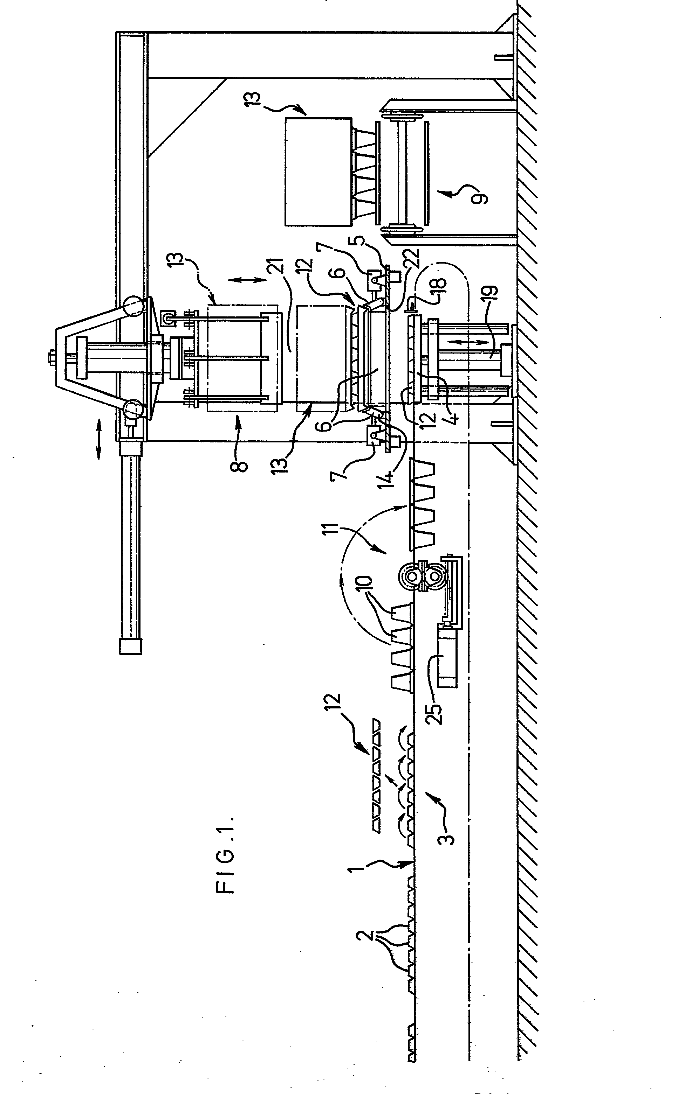

When the required number of layers has been built up into the stack, the stack can be removed for example by a forklift appliance, or by overhead grabs 8 as shown in Figure 1, and transferred for example to a storage conveyor 9.

It may be convenient to form a layer of larger foot ingots 10 at the foot of the stack.   In the illustrated embodiment, the foot ingots 10 are delivered on the conveyor 1 in batches of four.   At a turn-over station 11, the entire batch of foot ingots is inverted before being conveyed to the lifting table for addition to the bottom of the stack 13 in the same way as the standard ingots 2.   In the illustrated embodiment, the turn-over station  11 comprises a pair of grippers 23, at opposite sides of the conveyor 1, mounted on arms 24 which can be pivoted through 180$^{\circ}$ by one or more driving motors 25.

The apparatus described can be provided with any suitable form of driving means and control means to ensure correct sequencing of the movements of the components of the apparatus and in particular synchronisation of the operation of the lifting table, the plate 5, and the pawls 6.   Suitable devices will be readily apparent to those skilled in the art and are therefore not described herein.

It should be understood that the ingots may be fed singly and turned singly if required, and accumulated at the stacking position, without affecting the operation of the stacker, and that the movements may be achieved by any suitable motive power.

This invention is capable of doubling the output of a conventional stacker by forming the stack immediately above the position at which the layer is accumulated, reducing the movements to a 10 inch lift movement and a 10 inch fall movement, with the stack being rotated through 90° between upwards movements.

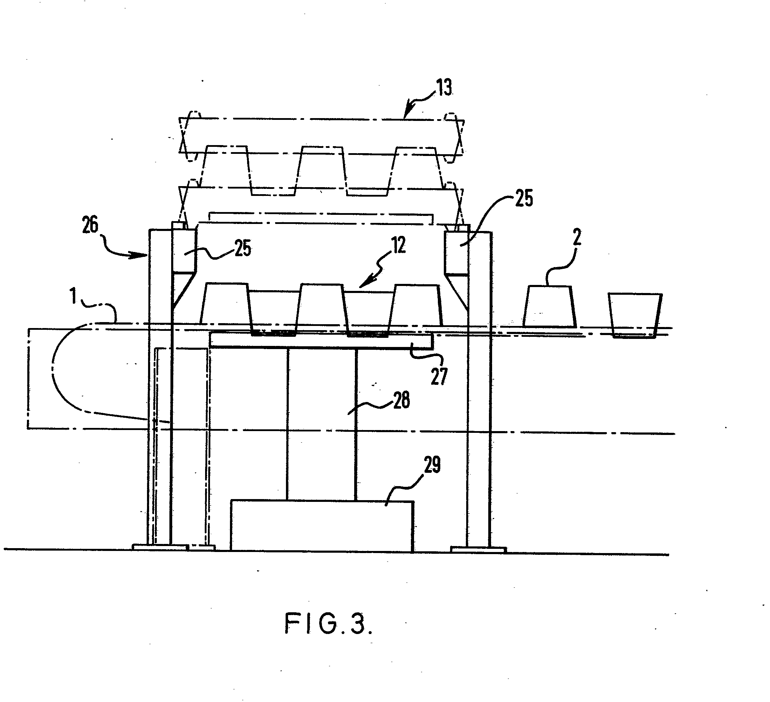

In the described apparatus the plate 5 supporting the stack is rotated after addition of each layer, so that the articles in successive layers are perpendicular to each other.  This is desirable or essential for stability of the stack.  The same arrangement of layers can be obtained by rotating alternate layers before adding them to the stack, for example, by rotating the lifting table while the ingots are raised but before they reach the bottom of the stack, or by lifting the stack off    its    supports, turning it through 90° and lowering it onto the supports. Fig. 3 shows a stacker of the last-mentioned kind.  Instead of four pawls, the stack 13 rests on two parallel bars 25 on a stacking frame 26.  Layers 12 of five nested bars are formed over the lifting table 27 whose lifting cylinder 28 is mounted on a slew ring 29.  The gap between the bars 25 is wider than the ingot layer width perpendicular to the ingots but is less than the ingot length.  The bars are horizontal and perpendicular to the conveyer 1. The ingot layer is lifted by the table 27 through the gap between the bars 25, rotated 90° by the slewing ring 29, and then lowered onto the bars 25. The bars 25 may be used to transfer the ingot  stack to another location.  For stacking articles of other shapes, rotation of alternate layers may not be necessary.

0042236

CLAIMS:

1.      A method of forming a stack of ingots or other articles, characterised by inserting successive layers at the bottom of the stack.

2.      A method according to claim 1 characterised in at each successive layer is lifted into contact with the bottom of the stack and lifts the stack.

3.      A method according to claim 1 or 2 in which each layer consists of a plurality of elongate articles side by side, characterised in that the stack is rotated about a vertical axis before insertion of each successive bottom layer so that in each layer the articles are transverse to those in adjoining layers.

4.      A method according to claim 1 or 2 in which each layer consists of a plurality of elongate articles side by side, characterised in that alternate bottom layers are rotated about a vertical axis before being incorporated in the stack so that in each layer the articles are transverse to those in adjoining layers.

5.      Apparatus for stacking ingots or other articles including a stack support (5) and means (4) for adding layers to the stack, characterised in that the stack support is directly above and is vertically spaced from a lifting device (4) arranged to lift successive layers (12) into contact with the bottom of the stack (13).

6.      Apparatus according to claim 5 characterised in that the stack support (5) is rotatable about a vertical axis.

0042236

7.      Apparatus according to claim 5 characterised in that the lifting device is rotatable about a vertical axis.

8.      Apparatus according to claim 5, 6 or 7 characterised in that the stack support (5) has an aperture (15) through which the layers are lifted by the lifting means (4), and retractable pawls (6) at the sides of the aperture (15) for supporting the lifted layers.

0042236

FIG.1.

0042236

FIG.2.

0042236

FIG.3.

| | | |
|---|---|---|
| European Patent Office | **EUROPEAN SEARCH REPORT** | 0042236 Application number |
| | | EP 81 30 2465 |

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | B 65 G 57/30 |
| X | US - A - 2 970 708 (K. WATANABE) <br><br> * The whole document * <br> --- | 1,2,4, 5,6,8 | B 22 D 5/00 |
| X | DE - B - 1 297 819 (H.J. BAGGELER) <br><br> * Column 3, line 26 to column 5, line 6; figures * <br> --- | 1-3,5, 7,8 | |
| X | DE - A - 2 210 383 (D. KAFFKA) <br><br> * Claims 1,3,7 and 8; figures * <br><br> --------- | 1-3,5, 7,8 | TECHNICAL FIELDS SEARCHED (Int. Cl.³) <br><br> B 65 G <br> B 22 D |

CATEGORY OF CITED DOCUMENTS

X: particularly relevant
A: technological background
O: non-written disclosure
P: intermediate docu   t
T: theory or principle underlying the invention
E: conflicting application
D: document cited in the application
L: citation for other reasons

&: member of the same patent family, corresponding document

| The present search report has been drawn up for all claims | | |
|---|---|---|
| Place of search | Date of completion of the search | Examiner |
| The Hague | 12.08.1981 | VAN ROLLEGHEM |

EPO Form 1503.1 06.78